# EUROPEAN PATENT APPLICATION

(11) **EP 1 560 343 A1**
(43) Date of publication of application: **03.08.2005**
(21) Application number: 05000250.0
(22) Date of filing: 07.01.2005
(51) Int. Cl.: H04B 1/38, H01Q 1/24

(54) **Antenna device for portable wireless terminal**

(30) Priority: 29.01.2004 KR 2004005769
(71) Applicant: Samsung Electronics Co., Ltd., Suwon-si, Gyeonggi-do (KR)
(72) Inventor: Kim, Reong-Hee, Yeongtong-gu Suwon-si Gyeonggi-do (KR)
(74) Representative: Grünecker, Kinkeldey, Stockmair & Schwanhäusser Anwaltssozietät

(57) **Abstract**

Disclosed herein is an antenna device for use with a portable wireless terminal. The antenna device includes an antenna housing which is fixed on a body of the portable wireless terminal, a fixed antenna which is fixed in the antenna housing, and is electrically connected with a main board incorporated in the body, and a shield plate which is attached to an inner surface of the antenna housing, and is interposed between the fixed antenna and a user's head while utilizing the terminal. In the antenna device for the portable wireless terminal configured as described above, due to the shield plate interposed between the fixed antenna and the user's head in a conversation mode, it is possible to prevent unwanted alteration in a radiation pattern of the antenna due to interference by the user's head, resulting in improved performance of the antenna device. The improved performance of the antenna device is especially effective in eliminating a communication disconnection phenomenon generated in poor propagation regions. Further, by virtue of the fact that the performance of the antenna device can be improved by properly installing the shield plate, it is possible to reduce the cost and time required to develop antenna devices.

## Description

### PRIORITY

This application claims priority to an application entitled "ANTENNA DEVICE FOR PORTABLE WIRELESS TERMINAL", filed in the Korean Intellectual Property Office on January 29, 2004 and assigned Serial No. 2004-0005769, the contents of which are hereby incorporated by reference.

### BACKGROUND OF THE INVENTION

### 1. Field of the Invention

The present invention relates to portable wireless terminals, and more particularly to an antenna device for use with portable wireless terminals.

### 2. Description of the Related Art

Generally, "portable wireless terminals" mean devices that are portable and enable owners of the devices to wirelessly communicate. Such portable wireless terminals tend to be much leaner and lighter to facilitate portability thereof, and their functions have been rapidly diversified so as to adapt to various multimedia environments or internet environments. Nowadays, the use of the portable wireless terminals is generalized without distinction of age or gender, or time and place, and thus the portable wireless terminals are recognized as ever-present necessities of daily life.

In the portable wireless terminals, meanwhile, their designs are tending to be gradually diversified and individualized in order to fulfill various user demands, and thereby, newly commercialized wireless terminals include bar-type, flip-type, and folder-type terminals, as well as rotary-type, and sliding-type terminals. The rotary-type terminal is configured so that a housing thereof, installed with a display unit, is invertible in its front and rear surfaces, and the sliding-type terminal is configured so that a pair of housings thereof are coupled to longitudinally slide relative to each other. These various portable wireless terminals commonly have an antenna device to secure a high transmitting and receiving rate and good signal quality. Such antenna devices are conventionally constructed as a combination of a helical antenna, which is fixed on a body of a portable wireless terminal, and a whip antenna, which is extendible away from or retractable toward the body of the portable wireless terminal. Nowadays, thanks to a gradual improvement in the performance of the antenna device, an antenna fixed on the body of the portable wireless terminal can function as the sole antenna. Furthermore, other internally incorporated antenna devices, i.e. antenna devices that are incorporated within the body of the portable wireless terminal, are being commercialized.

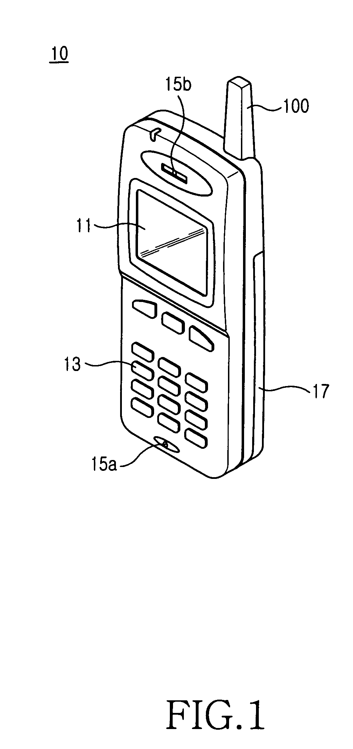

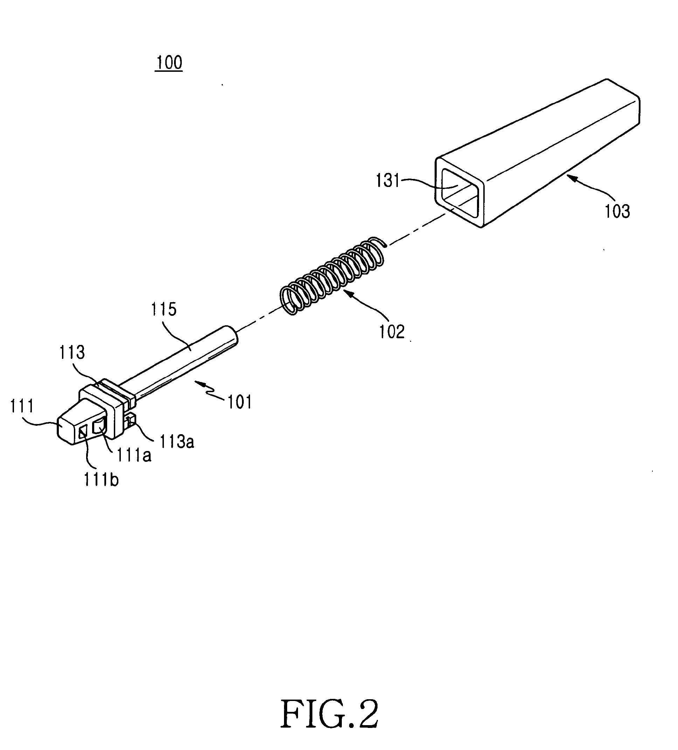

Fig. 1 is a perspective view illustrating a conventional portable wireless terminal 10 having an antenna device 100. Fig. 2 is an exploded perspective view illustrating the antenna device 100 shown in Fig. 1. Here, the antenna device 100 is a fixed antenna device which is fixedly mounted on the portable wireless terminal 10.

The portable wireless terminal 10 includes a single bar-type housing incorporating a main board therein. The housing is provided at a front surface thereof with a display unit 11, a keypad 13, a transmitter module 15a, and a receiver module 15b, and at a rear surface thereof with a removable battery pack 17. The antenna device 100, as a subject of the present invention, is fixedly mounted at an upper end of the housing.

Referring to Fig. 2, the antenna device 100 includes a support 101, a helical antenna 102, and an antenna housing 103.

The support 101 has a first fixing portion 111 which is fixed in the portable wireless terminal 10, a second fixing portion 113 which is fixed at one end of the antenna housing 103, and a support rod 115 adapted to support the helical antenna 102. The first fixing portion 111 is formed with a fitting hole 111b, into which fixing means (not shown), such as a protrusion, formed in the terminal 10 is fitted, and a terminal 111a for the connection of a power supply (not shown) incorporated in the terminal 10. The second fixing portion 113, integrated at one end of the first fixing portion 111, is formed with a fitting slot 113a along an outer peripheral surface thereof. The support rod 115 longitudinally extends from the second fixing portion 113 in an opposite direction of the first fixing portion 111. As the helical antenna 102, in the form of a coil, is wound around the support rod 115, it forms a fixed antenna.

The antenna housing 103 is internally defined with a receiving cavity 131 extending from the one end thereof. Inside the cavity 131 is received the helical antenna 102 wound around the support rod 115. Along an inner peripheral surface of the receiving cavity 131 is formed fixing means (not shown), such as a protruded portion, at an open end region thereof, to conform to the fitting slot 113a formed along the outer peripheral surface of the second fixing portion 113. Thereby, the second fixing portion 113 can be fixedly maintained at the one end of the antenna housing 103.

The above described fixed antenna device for a portable wireless terminal configured as described above, however, inevitably causes unwanted alteration in a radiation pattern thereof due to interference by a body part of a user, such as the head, while talking over the terminal. This results in a problem of degraded performance of the antenna device, and a communication disconnection phenomenon can occur in poor propagation regions. These problems are worse in fixed antenna devices mounted on a bar-type or flip-type terminals, in comparison to a folder-type terminals which interpose a folder between the user's head and the antenna device.

### SUMMARY OF THE INVENTION

Therefore, the present invention has been made in view of the above problems, and it is an object of the present invention to provide an antenna device for use with a portable wireless terminal that is designed to eliminate any interference due to a body-part of a user, such as the user's head, thereby being capable of maintaining good transmission performance of the terminal.

In accordance with an aspect of the present invention, the above and other objects can be accomplished by the provision of an antenna device for a portable wireless terminal, including an antenna housing which is fixed on a body of the portable wireless terminal; a fixed antenna which is fixed in the antenna housing, and is electrically connected with a main board incorporated in the body; and a shield plate which is attached to an inner surface of the antenna housing, and is interposed between the fixed antenna and a user's head while talking over the terminal.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a perspective view illustrating a conventional portable wireless terminal having an antenna device;
Fig. 2 is an exploded perspective view illustrating the antenna device shown in Fig. 1;
Fig. 3 is an exploded perspective view illustrating an antenna device for a portable wireless terminal in accordance with a preferred embodiment of the present invention; and
Fig. 4 is a side sectional view of the antenna device taken along the line A-A' shown in Fig. 3.

### DETAILED DESCRIPTION OF THE PREFERRED EMBODIMENT

Now, a preferred embodiment of the present invention will be described in detail with reference to the annexed drawings. In the following description, a detailed description of known functions and configurations incorporated herein will be omitted to avoid making the subject matter of the present invention unclear.

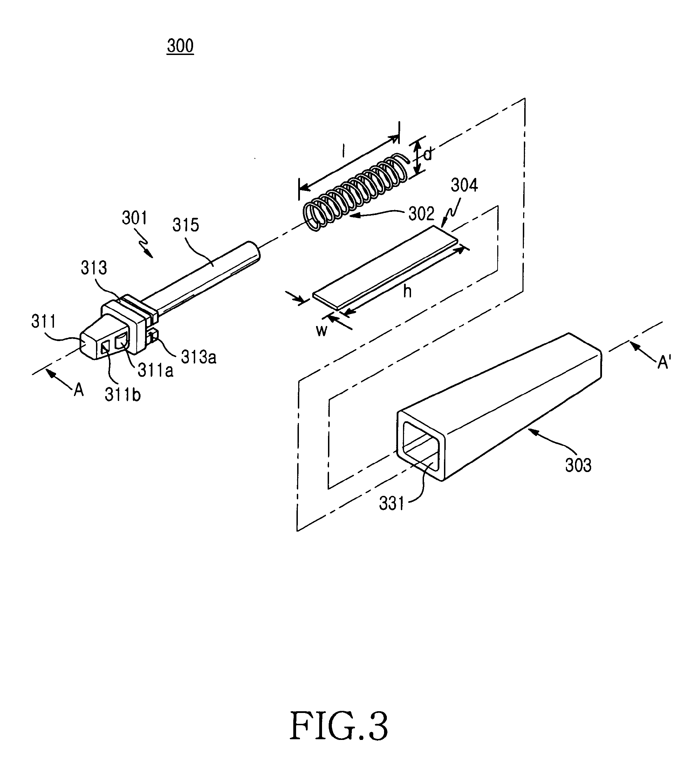

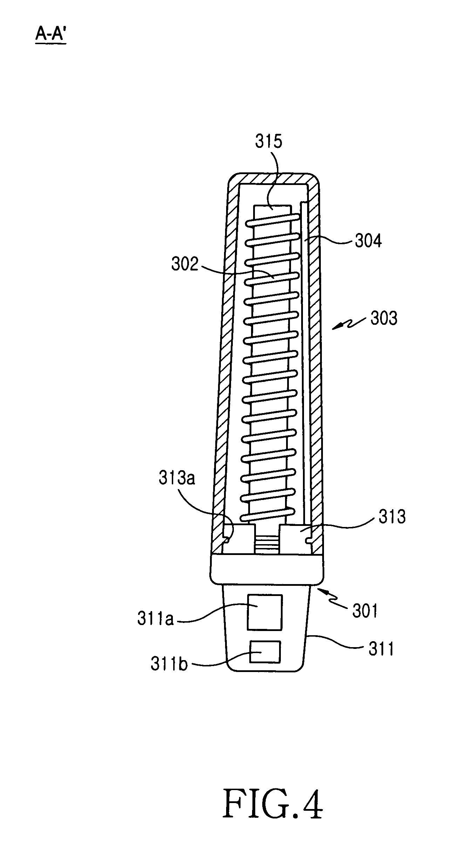

Fig. 3 is an exploded perspective view illustrating an antenna device, which is designated as reference numeral 300, for a portable wireless terminal in accordance with a preferred embodiment of the present invention. Fig. 4 is a side sectional view of the antenna device 300 taken along the line A-A' shown in Fig. 3.

As shown in Figs. 3 and 4, the antenna device 300 is a fixed antenna device, and includes a support 301, a helical antenna 302, an antenna housing 303, and a shield plate 304.

The support 301 has a first fixing portion 311 which is fixed in the portable wireless terminal, a second fixing portion 313 which is fixed at one end of the antenna housing 303, and a support rod 315 adapted to support the helical antenna 302. The first fixing portion 311 is formed with a fitting hole 311b, into which fixing means (not shown), such as a protrusion, formed in the terminal is fitted, and a terminal 311 a for the connection of a power supply (not shown) incorporated in the terminal. The second fixing portion 313, integrated at one end of the first fixing portion 311, is formed with a fitting slot 313a along an outer peripheral surface thereof. The support rod 315 longitudinally extends from the second fixing portion 313 in an opposite direction of the first fixing portion 311. Helical antenna 302, in the form of a coil, is wound around the support rod 315, to form a fixed antenna.

The antenna housing 303 is internally defined with a receiving cavity 331 extending from the one end thereof. Inside the cavity 331 is received the helical antenna 302 wound around the support rod 315. Along an inner peripheral surface of the receiving cavity 331 is formed a fixing means (not shown), such as a protruded portion, at an open end region thereof, to conform to the fitting slot 313a formed along the outer peripheral surface of the second fixing portion 313. Thereby, the second fixing portion 313 is fixedly maintained at the one end of the antenna housing 303.

The shield plate 304 is attached to an inner surface of the antenna housing 303, so that it is interposed between the user's head and the fixed antenna device 300 when the user utilizes the portable wireless terminal to talk. A width (w) and a length (h) of the shield plate 304 are determined so that the width (w) is equal to or greater than a diameter (d) of the helical antenna 302, and the length (h) is equal to or greater than a length (1) of the helical antenna 302. Such a width and length of the shield plate 304 is effective to improve the performance of the antenna device 300. If the width (w) of the shield plate 304 is excessively wide and surrounds the helical antenna 302, the shield plate 304 may adversely degrade the performance of the helical antenna 302 when in a conversation mode. Therefore, it is preferable that the shield plate 304 is formed to have the width (w) and length (h) approximately equal to or greater than the diameter (d) and length (1) of the helical antenna 302.

The following Table 1 represents comparative results of gains of the antenna device 300 in respective frequency bands, before and after installing the shield plate 304.

**TABLE 1**

| Frequency (MHz) | Max. Gain (dB) | | Min. Gain (dB) | | Avg. Gain (dB) | |
|---|---|---|---|---|---|---|
| | Pre-Installation | Post-Installation | Pre-Installation | Post-Installation | Pre-Installation | Post-Installation |
| 824 | -15.39 | -13.80 | -39.49 | -37.71 | -21.21 | -19.71 |
| 849 | -13.80 | -12.51 | -34.85 | -28.29 | -20.03 | -18.37 |
| 869 | -13.80 | -12.72 | -29.77 | -26.94 | -20.09 | -18.43 |
| 894 | -13.12 | -12.01 | -28.60 | -26.51 | -19.52 | -17.62 |

As can be seen from the comparative results represented in Table 1, after installing the shield plate 304, the gain of the antenna device 300 is increased above pre-installation levels by approximately 2 dB. Further, as represented in the following Table 2, after installing the shield plate 304, the antenna device 300 shows an improvement in a radiation sensitivity of approximately 1.5 dBm, and a radiation power of approximately 1 dBm. Table 2 represents the radiation sensitivity and radiation power, which are measured in a transmit frequency of 893.37 MHz and a receive frequency of 848.37 MHz, respectively.

**TABLE 2**

| Classification | Radiation Sensitivity (dBm) | | Radiation Power (dBm) | |
|---|---|---|---|---|
| | Max. | Avg. | Max. | Avg. |
| Pre-Installation | 100.54 | 93.49 | 17.16 | 10.84 |
| Post-Installation | 102.01 | 95.06 | 17.77 | 11.67 |

Such improvement in the radiation sensitivity and radiation power as described above has an effect of eliminating a communication disconnection phenomenon in poor propagation regions.

Conventionally, in order to improve such a gain, radiation sensitivity, and radiation pattern of the antenna device by adjusting the length, diameter, etc. of the antenna device. More particularly, for a helical antenna, a procedure of measuring the performance of the antenna device, and then readjusting the length, diameter, etc. of the antenna device on the basis of the measured performance results has to be repeatedly performed. However, according to the present invention, it is possible to improve the performance of the antenna device by simply installing the shield plate. Consequently, it is possible to reduce the cost and the time required to develop antenna devices.

As apparent from the above description, the present invention provides an antenna device for a portable wireless terminal which can prevent unwanted alteration in a radiation pattern thereof due to interference by a body part of a user, such as the user's head, by providing a shield plate, which is interposed between the user's head and a fixed antenna while talking over the terminal, thereby achieving an improvement in performance thereof. Such improved performance of the antenna device achieved from the shield plate, especially, is effective to eliminate a communication disconnection phenomenon generated in poor propagation regions. Since the performance of the antenna device can be improved by simply installing the shield plate, it is possible to reduce the cost and the time required to develop antenna devices.

Although the preferred embodiment of the present invention has been disclosed for illustrative purposes, those skilled in the art will appreciate that various modifications, additions and substitutions are possible, without departing from the scope of the invention as disclosed in the accompanying claims. For example, in the preferred embodiment of the present invention, the antenna device includes a helical antenna as a fixed antenna, and a support for supporting the helical antenna, but one of skill will recognize that the present invention is also applicable to other antenna devices, such as planar-type or rod-type antennas. Moreover, it will be clearly understood that the antenna device of the present invention is applicable to other kinds of terminals in addition to the bar-type portable wireless terminal employed to describe the preferred embodiment of the present invention.

## Claims

1. An antenna device (300) for a portable wireless terminal (10), comprising:
an antenna housing (303) fixed on a body of the portable wireless terminal;
a fixed antenna (302) positioned in the antenna housing (303) and electrically connected to a main board incorporated in the body; and
a shield plate (304) attached to an inner surface of the antenna housing (303) and interposed between the fixed antenna (302) and a user's head when the user utilizes the terminal.

2. The device as set forth in claim 1, wherein the fixed antenna (302) is a helical antenna in the form of a coil.

3. The device as set forth in claim 1 or 2, wherein the shield plate (304) has a width (w) and length (h) equal to or greater than a diameter (d) and length (l), respectively, of the fixed antenna (302).

4. The device as set forth in claim 1, wherein the fixed antenna (302) is a helical antenna, and wherein the shield plate (304) has a width greater than a diameter of the helical antenna, and the shield plate had a length greater than a length of the helical antenna.

5. The device as set forth in claim 3, wherein the width (w) of the shield plate (304) is limited so as not to surround the fixed antenna (302).
